Europäisches Patentamt

European Patent Office

Office européen des brevets

(11) Veröffentlichungsnummer : **0 181 535**
**B1**

(12) # EUROPÄISCHE PATENTSCHRIFT

(45) Veröffentlichungstag der Patentschrift :
04.05.88

(51) Int. Cl.⁴ : **A 47 J 36/26**

(21) Anmeldenummer : 85113405.6

(22) Anmeldetag : 22.10.85

(54) **Babykostwärmer.**

(30) Priorität : 16.11.84 DE 8433681 U

(43) Veröffentlichungstag der Anmeldung :
21.05.86 Patentblatt 86/21

(45) Bekanntmachung des Hinweises auf die Patenterteilung : 04.05.88 Patentblatt 88/18

(84) Benannte Vertragsstaaten :
**BE DE FR GB IT LU NL SE**

(56) Entgegenhaltungen :
CH-A-  346 650
DE-A-  878 990
DE-B- 1 257 305
DE-B- 1 273 746
DE-C-  878 990
DE-U- 1 928 159
DE-U- 1 975 391
FR-A- 2 283 618
US-A- 1 414 494
US-A- 1 649 067

(73) Patentinhaber : DAVID + BAADER - DBK - Spezialfabrik Elektrischer Apparate und Heizwiderstände -
GmbH
Rheinstrasse 72-74
D-6744 Kandel/Pfalz (DE)

(72) Erfinder : David, Josef
Maxburgring 7 b
D-6748 Bad Bergzabern (DE)

(74) Vertreter : Patentanwälte Grünecker, Kinkeldey,
Stockmair & Partner
Maximilianstrasse 58
D-8000 München 22 (DE)

EP 0 181 535 B1

## Beschreibung

Die Erfindung bezieht sich auf einen Babykostwärmer nach dem Oberbegriff des Patentanspruchs 1. Ein solcher ist im Handel erhältlich.

Bei dem bekannten Babykostwärmer ist die Heizwicklung als eine Ringwicklung nach Art einer Toroidspule auf eine wärmebeständige Papphülse gewickelt, die auf den Becher des Babykostwärmers geschoben ist, wobei sie gegen diesen durch eine wärmebeständige Kartonmanschette isoliert ist, die sich zwischen dem Bechermantel und der Wicklung befindet. Nach außen ist die Heizwicklung ebenfalls durch eine Manschette aus wärmebeständiger Pappe isoliert. Der Thermostatschalter befindet sich im Fußbereich des Gerätes und ist mit dem Becherboden mittels einer relativ langen Blechlasche verbunden, die die Wärme vom Becherboden zum Thermostatschalter leitet.

Das Gerät weist aufgrund der gewählten Konstruktion verschiedene Nachteile auf. Da die Heizwicklung als getrenntes Einzelteil hergestellt ist und erst nachträglich auf den Becher aufgeschoben wird, ergeben sich aufgrund des zum Aufschieben notwendigen Spiels unvermeidbar Lufteinschlüsse zwischen der Heizwicklung und dem Bechermantel, die den Wärmeübergang von der Heizwendel zum Becher behindern. Die auf der Papphülse außen liegenden Abschnitte des Heizdrahtes der Heizwicklung vermögen ihre Wärme dem Becher nur nach Überwindung auch der durch die Papphülse gebildeten Isolierung zusätzlich zu der von der innen liegenden Manschette gebildeten Isolierung zu vermitteln. Der Wärmeübergang ist daher mäßig, was zu einem unwirtschaftlichen Betrieb führt und die Aufheizzeit verlängert. Zur Verlängerung der Aufheizzeit trägt weiterhin bei, daß die verwendeten Isolierstoffmaterialien ein relativ schlechtes Wärmeleitvermögen haben. Hierdurch und ferner durch die Tatsache, daß die Verbindungslasche, die den Becherboden mit dem Thermostatschalter verbindet, recht lang ist, ergibt sich ein träges Ansprechverhalten des Thermostatschalters. Es kommt zu ziemlich großen Regelabweichungen, d. h. der Thermostatschalter kann eine vorgegebene Temperatur nur mit einem relativ großen Schwankungsbereich einhalten.

Als weiterer Nachteil wäre zu erwähnen, daß sich eine Wicklung der angegebenen Art nur mit komplizierten Maschinen herstellen läßt.

Aus der DE-C-878 990 ist ein elektrischer Babykostwärmer bekannt, bestehend aus einem Becher zur Aufnahme eines Wasserbades und eines die Babykost enthaltenden Behälters, insbesondere einer Milchflasche, bei der die Heizwicklung auf eine Schicht aus wärmebeständigem Kunstharz gewickelt ist, die zuvor auf den Becher aufgebracht worden ist. Der Becher besteht aus einem schwer wärmeleitfähigen Metall, wobei die Wärmeleitfähigkeit und die Abmessungen so gewählt sind, daß der Becher den Wärmenebenschluß zwischen der Heizwicklung und einem am Behälterboden angebrachten Bimetallschalter bildet, wobei der Bimetallschalter wiederum durch die den Becher umgebende Kunstharzschicht gegenüber dem Becherboden isoliert ist. Man möchte hierdurch beim Anheizen der Babykost in einem in den Babykostwärmer eingesetzten Gefäß schlecht wärmeleitfähigen Materials die Verzögerung ausgleichen, die in der Wirkung des Schalters infolge des beträchtlichen Wärmewiderstandes bei der Wärmeübertragung von der Heizwicklung über die Babykost zum Schalter auftreten würde. Freilich läßt dieser Babykostwärmer erwarten, daß nach dem erstmaligen Erwärmen der Babykost auf eine Solltemperatur diese nur mit relativ großer Schwankungsbreite aufrechterhalten werden kann.

Aus der FR-A-22 83 618 ist ein elektrischer Wasserkessel bekannt, der bodenseitig beheizt wird. Bei ihm besteht das Heizelement aus einem elektrisch leitfähigen Film, beispielsweise aus Graphit, der am Boden des Wasserkessels angebracht ist und mittels Polyesterfolie elektrisch isoliert ist. Ein Temperaturfühlerelement ist durch den Boden des Kessels hindurchgeführt und erstreckt sich in den Innenraum des Kessels, um vom Wasser umspült zu werden.

Der Erfindung liegt die Aufgabe zugrunde, einen Babykostwärmer der eingangs genannten Art anzugeben, der eine vorgegebene Temperatur schnell erreichen und in engen Grenzen halten läßt und fertigungstechnisch einfach herstellbar ist.

Diese Aufgabe wird durch die kennzeichnenden Merkmale des Anspruchs 1 gelöst. Vorteilhafte Weiterbildungen der Erfindung sind Gegenstand der abhängigen Ansprüche.

Die Erfindung strebt einen möglichst innigen Kontakt zwischen der Heizwicklung und dem Becher an. Daher ist als Isolierstoff ein Material gewählt, das ein hohes Wärmeleitvermögen aufweist, dabei aber selbstverständlich die notwendigen elektrischen Isoliereigenschaften sicherstellt. Ein Polyesterfolienmaterial hat sich für diesen Zweck als besonders geeignet erwiesen. Es stellt schon bei geringer Dicke eine ausreichende elektrische Isolierung sicher und gewährleistet somit einen schnellen Wärmeübergang vom Heizdraht auf die Becherwand. Dabei ist die Heizwicklung direkt auf den Becher gewickelt, mit der Isolierfolie als Zwischenlage. Dies vermeidet weitestgehend Lufteinschlüsse zwischen dem Heizdraht und der Becherwand und ermöglicht zugleich eine billige Herstellung der Wicklung, da der Becher selbst den Wickelkörper bildet und mit einfachen Maschinen bewickelt werden kann.

Im Betrieb wird sich aufgrund des guten Wärmeleitvermögens des Isoliermaterials der Raum um die Wicklung erwärmen, es wird jedoch sehr viel mehr Wärme, und dies ungehindert, auf den Becher übertragen, solange dieser kälter ist, als die Umgebung. Zwar wird der Thermostatschalter über die Blechlasche vom Behälter her miterwärmt, doch hinkt seine wirksame Temperatur immer etwas hinter der aktuellen Behältertemperatur hinterher, weil der Wärmeübertragungsweg eine endliche Größe hat. Mit zunehmender Erwärmung des Bechers nimmt dieser jedoch immer weniger Wärme von der Heizwicklung auf und es wird von dieser verstärkt Wärme nach außen abgegeben. Durch geeignete Anbringung des Thermostatschalters, wie vorliegend geschehen, wird erreicht, daß sich Umgebungswärme besonders gut auf den Thermostatschalter überträgt und diesen zusätzlich erwärmt. Es wird damit ein Zustand erreicht, bei welchem die an ihm wirksame Temperatur etwa gleich der Innentemperatur im Becher ist. Der Thermostatschalter schaltet daher relativ häufig, er ist in der Lage, eine an ihm eingestellte Temperatur mit geringer Schwankungsbreite zu halten.

Die Erfindung soll nachfolgend unter Bezugnahme auf ein in den Zeichnungen dargestelltes Ausführungsbeispiel näher erläutert werden. Es zeigt :

Fig. 1 einen erfindungsgemäßen Babykostwärmer im Längsschnitt, und

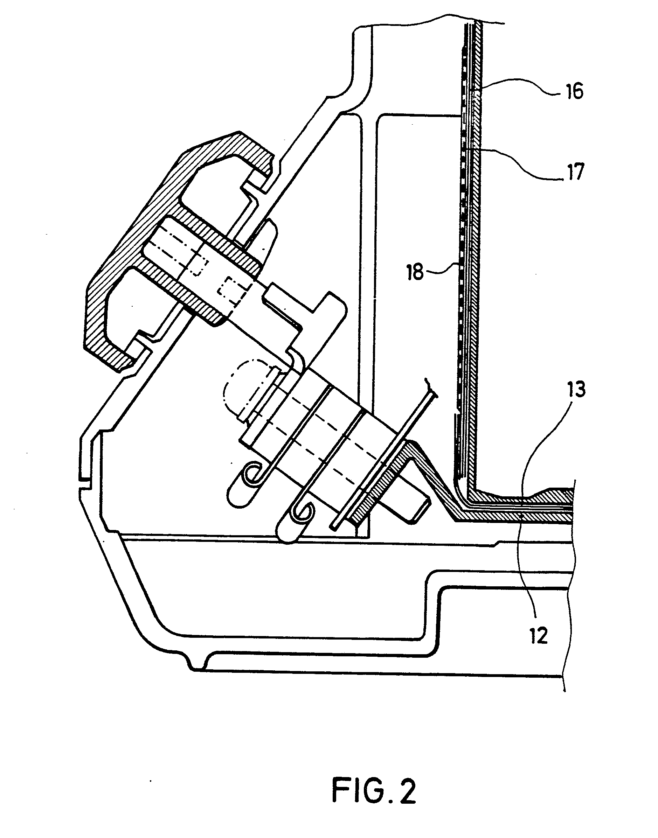

Fig. 2 einen Ausschnitt aus dem Babykostwärmer nach Fig. 1 in wergrößertem Maßstab.

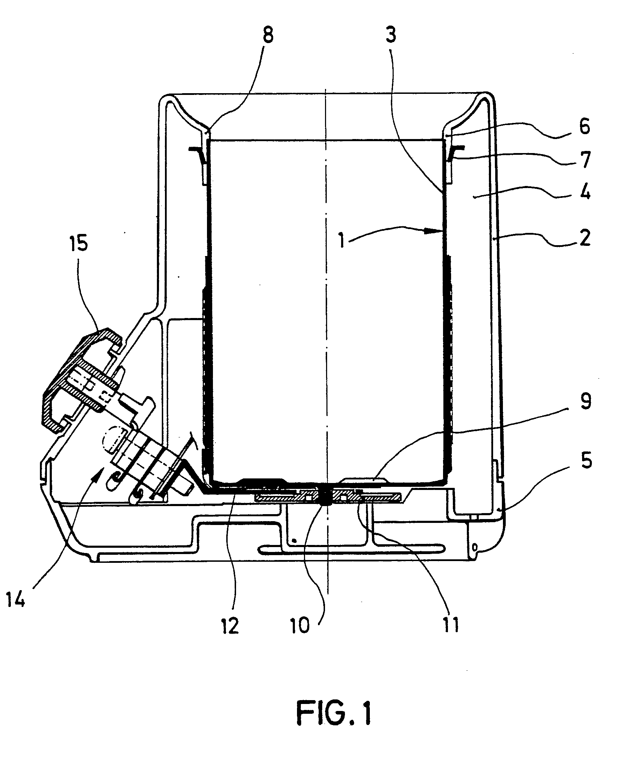

Der Babykostwärmer nach Fig. 1 besteht in wesentlichen aus einem metallischen Becher 1 von relativ schlanker Gestalt, der in einem Gehäuse 2 aus schlagzähem Kunststoffmaterial angeordnet ist, wobei zwischen dem Mantel 3 des Bechers 1 und dem Gehäuse 2 ein lufterfüllter Zwischenraum 4 verbleibt. Das Gehäuse 2 weist ein an ihm verrastetes Bodenteil 5 auf, das den Becher 1 von unten abstützt. An seinem oberen Ende weist das Gehäuse 2 einen nach innen gezogenen Rand 6 auf, der sich von außen an den Rand des Bechers 1 anlegt und an diesem mittels eines aufgeschobenen Druckringes 7 verklemmt ist. Gegen ein Herausgleiten ist der Becher 1 durch eine Schulter 8 gesichert, die am inneren Umfang des Gehäuserandes 6 ausgebildet ist.

Am Boden trägt der Becher 1 innen einige, vorzugsweise drei hochstehende Rippen 9, die ein aufzunehmendes Babynahrungsgefäß insbesondere eine Milchflasche abstützen sollen. Außen weist der Boden des Bechers 1 einen Mittenzapfen 10 auf, der mit einem Gewinde versehen ist. Auf den Gewindezapfen 10 ist eine Isolierstoffscheibe 11 aufgedrückt, die nach innen abgestuft ist und in die Bohrung einer Blechlasche 12 eingreift und die Bohrung zentriert. Die Blechlasche 12 erstreckt sich am Becherboden entlang, wobei zwischen ihr und dem Becherboden eine gut wärmeleitfähige Isolierstoffzwischenlage 13, vorzugsweise aus einem Polyestermaterial angeordnet ist. Die Blechlasche erstreckt sich über den Rand des Becherbodens hinaus, ist nach oben abgewinkelt und trägt einen insgesamt mit 14 bezeichneten Thermostatschalter, dessen Schalttemperatur mittels eines außerhalb des Gehäuses 2 angeordneten Einstellknopfes 15 einstellbar ist. Die die Blechlasche 12 am Behälterboden sichernde Scheibe 11 ist von unten von dem Gehäuseunterteil 5 abgestützt.

Um etwa die untere Hälfte des Bechers 1 ist eine Isolierstoffmanschette 16 angeordnet, die im vorliegenden Beispiel aus drei Lagen einer um den Becher 1 gewickelten Polyesterfolie von etwa 0,05 mm Dicke besteht. Um die Isolierstoffmanschette 16 ist schraubenförmig ein Heizdraht 17 gewickelt, der insgesamt die Heizwicklung bildet. Nach außen ist der Heizdraht 17 von einer Isolierstoffschicht 18 bedeckt, die im vorliegenden Falle aus einer Lage der schon erwähnten Polyesterfolie gebildet ist. Vorzugsweise handelt es sich bei dieser Polyesterfolie um eine selbstklebende Folie, was die Verarbeitung sehr erleichtert.

Der Heizdraht besteht aus NiCr 8020. Seine Leistungsaufnahme beträgt 80 W. Er hat eine Länge von etwa 8,3 m und einen Durchmesser von 0,14 mm. Sein Windungsabstand ist so gewählt, daß sich bei der herrschenden Netzspannung von 220 V eine Oberflächenbelastung am Becher von etwa 2,5 W/cm$^2$ ergibt.

Im Betrieb gibt der Heizdraht 17 Wärme nach außen in den Zwischenraum 4, und an den Becher 1 ab. Es wird sich der Zwischenraum zunächst schnell erwärmen, es erfolgt dann aber eine verstärkte Wärmeabgabe an den Becher 1. Die Erwärmung des Bechers 1 und dessen Inhalts wird über die Blechlasche 12 auf den Thermostatschalter übertragen. Gleichzeitig überträgt sich auch die im Zwischenraum 4 herrschende Wärme auf den Thermostatschalter 14. Die dem Thermostatschalter 14 insgesamt zugeführte Wärme erwärmt diesen ebenso schnell, wie sich der Inhalt des Bechers 1 erwärmt. Bei Erreichen der eingestellten Temperatur schaltet der Thermostatschalter die Stromversorgung zum Heizdraht 17 ab. Da der Heizdraht 17 einen sehr innigen Wärmekontakt zum Becher 1 hat, kann am und um den Heizdraht 17 kein wesentlicher Wärmestau auftreten, so daß nach dem Unterbrechen der Stromversorgung vom Heizdraht 17 aus keine wesentliche Nacherwärmung mehr stattfindet. Sogenannte Überschwingungseffekte können daher nicht beobachtet werden.

Sobald die Temperatur im und am Becher 1 unter den vom Thermostatschalter 14 bestimmten unteren Schwellenwert gesunken ist, schaltet dieser den Stromkreis wieder ein und der zuvor beschriebene Vorgang wiederholt sich, jedoch von einer höheren Anfangstemperatur ausgehend. Da der Thermostatschalter aufgrund der gewählten Anordnung sehr schnell anspricht, ist ein recht häufiges Schaltverhalten festzustellen, was ein sichtbarer Ausdruck dafür ist, daß eine vorgewählte Temperatur in engen Grenzen eingehalten wird.

**Patentansprüche**

1. Babykostwärmer, bestehend aus einem metallischen Becher (1) zur Aufnahme eines Wasserbades und eines die Babykost enthaltenden Behälters, insbesondere einer Milchflasche, einer wenigstens den unteren Teilbereich des Bechers (1) umgebenden elektrischen Heizwicklung (17), die gegenüber dem Becher (1) und nach außen mittels Isolierstoffmanschetten (16, 18) aus einem folienhaften Material elektrisch isoliert ist, einem am Becherboden mittels einer wärmeleitenden Blechlasche (12) befestigten, mit der Heizwicklung (17) elektrisch verbundenen Thermostatschalter (14) und einem den Becher (1) und den Thermostatschalter (14) aufnehmenden Gehäuse (2), das oben eine mit der Becheröffnung fluchtende Öffnung aufweist, deren Rand mit dem Becherrand verbunden ist und das mit dem Becher (1) einen lufterfüllten Zwischenraum (4), in dem sich auch der Thermostatschalter (14) befindet, begrenzt, dadurch gekennzeichnet, daß die Isolierstoffmanschetten (16, 18) aus einem Material hohen Wärmeleitvermögens bestehen, wobei dieses Material, das folienhaft ist, um den Becher gewickelt ist und die innere Isolierstoffmanschette (16) bildet, daß die Heizwicklung (17) direkt auf den Becher (1) gewickelt ist, mit der inneren Isolierstoffmanschette (16) als Zwischenlage, wobei die Heizwicklung (17) von der äußeren Manschette (18), die aus dem genannten Material besteht, bedeckt ist, und daß der Thermostatschalter (14) mit geringem Abstand am Boden des Bechers (1) befestigt und der Heizwicklung (17) benachbart ist.

2. Babykostwärmer nach Anspruch 1, dadurch gekennzeichnet, daß zwischen dem Boden des Bechers (1) und der Blechlasche (12) eine Isolierstoffzwischenlage (13) angeordnet ist.

3. Babykostwärmer nach Anspruch 1 oder 2, dadurch gekennzeichnet, daß die Isolierstoffzwischenlage bzw. -manschetten (13, 16, 18) aus einer Polyesterfolie bestehen.

4. Babykostwärmer nach einem der vorhergehenden Ansprüche, dadurch gekennzeichnet, daß die zwischen Becher (1) und Heizwicklung (17) angeordnete Isolierstoffmanschette (16) eine Dicke von etwa 0,17 mm und die äußere Isolierstoffmanschette (18) eine Dicke von etwa 0,05 mm aufweisen.

5. Babykostwärmer nach einem der vorhergehenden Ansprüche, dadurch gekennzeichnet, daß der Drahtwiderstand und der Windungsabstand der Heizwicklung (17) so gewählt sind, daß sich bei Nennspannung eine mittlere Oberflächenbelastung von etwa 2,5 W/cm$^2$ ergibt.

6. Babykostwärmer nach Anspruch 5, dadurch gekennzeichnet, daß der Heizdraht (17) eine Länge von 8,3 m, einen Durchmesser von 0,14 mm und einen spezifischen Widerstand von 1,1 Ω mm$^2$/m aufweist.

## Claims

1. Baby-food warmer composed of a metallic bowl (1) for accommodating a water bath and a vessel containing the baby-food, in particular a milk bottle, an electrical heating coil (17) which surrounds at least the lower part of the bowl (1) and is electrically insulated from the bowl (1) and on the outside by means of collars (16, 18) of insulating material consisting of a film-like material, a thermostat switch (14) fixed to the bottom of the bowl by means of a thermally conducting sheet metal link (12) and connected electrically to the heating coil (17), and a housing (2) which accommodates the bowl (1) and the thermostat switch (14) and has at the top, flush with the bowl opening, an opening, the edge (6) of which is joined to the edge of the bowl and, with the bowl (1), forms the boundaries of an air-filled intermediate space (4) in which the thermostat switch (14) is also located, characterised in that the insulating collars (16, 18) are composed of a material of high thermal conductivity, this material, which is filmlike, being wound around the bowl and forming the inside collar (16) of insulating material, in that the heating coil (17) is wound directly onto the bowl (1), with the inside collar (16) of insulating material as an intermediate layer, the heating coil (17) being covered by the outside collar (18), which is composed of the material mentioned, and in that the thermostat switch (14) is fixed to the bottom of the bowl (1) with a short separation and is adjacent to the heating coil (17).

2. Baby-food warmer according to claim 1, characterised in that an intermediate layer (13) of insulating material is positioned between the bottom of the bowl (1) and the sheet metal link (12).

3. Baby-food warmer according to claim 1 or 2, characterised in that the intermediate layer or collars (13, 16, 18) of insulating material consist of a polyester film.

4. Baby-food warmer according to one of the preceding claims, characterised in that the collar (16) of insulating material positioned between the bowl (1) and the heating coil (17) has a thickness of about 0.17 mm and the outside collar (18) of insulating material has a thickness of about 0.05 mm.

5. Baby-food warmer according to one of the preceding claims, characterised in that the wire resistance and the separation between turns of the heating coil (17) are chosen so that an average surface loading of about 2.5 W/cm$^2$ results at the nominal voltage.

6. Baby-food warmer according to claim 5, characterised in that the heating wire is 8.3 m long and has a diameter of 0.14 mm and a specific resistance of 1.1 Ω mm$^2$/m.

## Revendications

1. Chauffe-biberons, composé d'un récipient métallique (1) destiné à recevoir un bain-marie et un réservoir contenant la nourriture pour bébés, en particulier un biberon, d'un enroulement chauffant électrique (17) qui entoure au moins la partie inférieure du récipient (1) et est isolé électriquement par rapport au récipient (1) et vers l'extérieur à l'aide de garnitures isolantes (16, 18) constituées d'un matériau se présentant sous forme de feuille, d'un interrupteur thermostatique (14) relié électriquement à l'enroulement chauffant (17) et fixé sur le fond du récipient à l'aide d'une bride de tôle (12) thermoconductrice et d'un boîtier (2) qui loge le récipient (1) et l'interrupteur thermostatique (14) et présente en haut une ouverture alignée avec l'ouverture du récipient et dont le bord est relié avec le bord du récipient, le boîtier délimitant avec le récipient (1) un espace intermédiaire (4) rempli d'air dans lequel se trouve également l'interrupteur thermostatique (14), caractérisé en ce que les garnitures isolantes (16, 18) sont constituées par un matériau de conductibilité thermique élevée, ce matériau, qui se présente sous forme de feuille, étant enroulé autour du récipient et formant la garniture isolante intérieure (16), en ce que l'enroulement chauffant (17) est enroulé directement sur le récipient (1), avec la garniture isolante intérieure (16) comme couche intermédiaire, l'enroulement chauffant (17) étant recouvert par la garniture extérieure (18) constituée par le matériau mentionné, et l'interrupteur thermostatique (14) étant fixé avec un écartement réduit sur le fond du récipient (1) et étant voisin de l'enroulement chauffant (17).

2. Chauffe-biberons selon la revendication 1, caractérisé en ce qu'une couche isolante intermédiaire (13) est placée entre le fond du récipient (1) et la bride de tôle (12).

3. Chauffe-biberons selon la revendication 1 ou 2, caractérisé en ce que la couche intermédiaire et les garnitures isolantes (13, 16, 18) sont constituées par une feuille de polyester.

4. Chauffe-biberons selon l'une des revendications précédentes, caractérisé en ce que la garniture de matériau isolant (16) placée entre le récipient (1) et l'enroulement chauffant (17) présente une épaisseur de 0,17 mm environ, et la garniture extérieure de matériau isolant (18) une épaisseur de 0,05 mm environ.

5. Chauffe-biberons selon l'une des revendications précédentes, caractérisé en ce que la résistance du filament et l'écartement des spires de l'enroulement chauffant (17) sont choisis de manière à obtenir, pour une tension nominale, une charge moyenne de surface de 2,5 W/cm$^2$ environ.

6. Chauffe-biberons selon la revendication 5, caractérisé en ce que le filament chauffant (17) présente une longueur de 8,3 m, un diamètre de 0,14 mm et une résistance spécifique de 1,1 Ω mm$^2$/m.

FIG. 1

FIG.2